# EUROPÄISCHE PATENTSCHRIFT

(11) **EP 3 471 999 B1**
(45) Veröffentlichungstag und Bekanntmachung des Hinweises auf die Patenterteilung: **24.08.2022**
(21) Anmeldenummer: 17726857.0
(22) Anmeldetag: 17.05.2017
(51) Int. Cl.: B60Q 1/00, B60Q 9/00, G01S 17/93, G01S 15/93, G01S 13/93

(54) **KRAFTFAHRZEUG**
MOTOR VEHICLE
VÉHICULE AUTOMOBILE

(30) Priorität: 16.06.2016 DE 102016210718
(43) Veröffentlichungstag der Anmeldung: 24.04.2019
(73) Patentinhaber: Bayerische Motoren Werke Aktiengesellschaft, 80809 München (DE)
(72) Erfinder: HEIMRATH, Michael, 82256 Fuerstenfeldbruck (DE); KÖGEL, Tobias, 85375 Neufahrn (DE)
(86) Internationale Anmeldenummer: PCT/EP2017/061788
(87) Internationale Veröffentlichungsnummer: WO 2017/215868

(56) Entgegenhaltungen:
- EP-A2- 2 138 349
- DE-A1- 2 742 271
- DE-T2- 60 204 534
- US-A- 5 426 571

## Beschreibung

Die Erfindung betrifft ein Kraftfahrzeug, wobei das Kraftfahrzeug ein einspuriges Kraftfahrzeug, wie z.B. ein Motorrad, oder ein mehrspuriges und insbesondere zweispuriges Kraftfahrzeug mit Neigetechnik ist. Ein Kraftfahrzeug mit Neigetechnik zeichnet sich dadurch aus, dass sich das Kraftfahrzeug bei einer Kurvenfahrt analog zu einem einspurigen Fahrzeug um seine Längsachse neigt.

Aus dem Stand der Technik ist es bekannt, in Kraftfahrzeugen und u.a. auch in einspurigen Kraftfahrzeugen Umfeldsensorik zu verbauen, um vor dem Kraftfahrzeug befindliche Objekte bzw. Verkehrsteilnehmer zu detektieren. Diese Umfeldsensorik wird in der Regel in Kombination mit einem Fahrerassistenzsystem genutzt, beispielsweise mit einer aktiven Geschwindigkeitsregelung, welche die Geschwindigkeit des Kraftfahrzeugs anpasst, so dass ein Abstand zu einem vorausfahrenden Verkehrsteilnehmer nicht unterschritten wird. Die Verwendung von Umfeldsensorik in einspurigen bzw. mehrspurigen Kraftfahrzeugen mit Neigetechnik hat den Nachteil, dass sich der mit der Sensorik erfasste Bereich vor dem Kraftfahrzeug bei seiner Schräglage in einer Kurvenfahrt neigt, wodurch der Sichtbereich der Umfeldsensorik auf der Kurvenaußenseite deutlich eingeschränkt wird.

Aus dem Stand der Technik sind Scheinwerfersysteme für Motorräder bekannt, welche um die Längsachse des Motorrads rotieren können. Ein Beispiel eines solchen Scheinwerfers ist in den Druckschriften DE 10 2013 216 584 A1 und US 5 426 571 A beschrieben. Solche Scheinwerfer können in Kombination mit einer Lagesensorik des Motorrads eingesetzt werden, so dass die Neigung der mit dem Scheinwerfer generierten Lichtverteilung bei einer Schräglage des Motorrads durch entsprechende Rotation des Scheinwerfers ausgeglichen wird und somit der Fahrbahnbereich vor dem Motorrad immer optimal ausgeleuchtet wird.

Die Druckschrift DE 602 04 534 T2 offenbart eine Fahrerassistenz-Vorrichtung für Kraftfahrzeuge mit einem Sender zum Aussenden von Strahlen nach vorne bezüglich des Kraftfahrzeugs und einem Empfänger zum Empfangen eines Teils der von einem Zielfahrzeug reflektierten Strahlen. Die Fahrerassistenz-Vorrichtung ist in einem Scheinwerfer integriert und der Azimutwinkel des von dem Sender ausgesendeten Strahlenbündels wird entsprechend der Straßenbiegung so verändert, dass das Strahlenbündel der Biegung folgt.

Aufgabe der Erfindung ist es, ein einspuriges Kraftfahrzeug bzw. ein mehrspuriges Kraftfahrzeug mit Neigetechnik zu schaffen, in dem die Funktionalität einer im Kraftfahrzeug verbauten Umfeldsensorik verbessert wird.

Diese Aufgabe wird durch den Patentanspruch 1 gelöst. Weiterbildungen der Erfindung sind in den abhängigen Ansprüchen definiert.

Das erfindungsgemäße Kraftfahrzeug ist ein einspuriges Kraftfahrzeug und vorzugsweise ein Motorrad. Alternativ kann das erfindungsgemäße Kraftfahrzeug auch ein mehrspuriges und vorzugsweise zweispuriges Kraftfahrzeug mit Neigetechnik sein. Das Kraftfahrzeug umfasst einen oder mehrere Umfeldsensoren, die in der Front des Kraftfahrzeugs verbaut sind und zur Erfassung eines Bereichs vor der Front des Kraftfahrzeugs eingerichtet sind. Der oder die Umfeldsensoren sind (mechanisch) starr mit einem im Kraftfahrzeug verbauten beweglichen Element verbunden, das über eine Aktorik des Kraftfahrzeugs durch Drehen und/oder Verschwenken bewegt werden kann. Im Kraftfahrzeug ist ferner eine Steuereinheit zur Steuerung der Aktorik sowie eine Lagesensorik zur Detektion der Lage des Kraftfahrzeugs im Raum vorgesehen.

Die Steuereinheit ist derart ausgestaltet, dass sie die Aktorik bei der Fahrt des Kraftfahrzeugs in Abhängigkeit von der durch die Lagesensorik detektierten Lage des Kraftfahrzeugs derart ansteuert, dass bei einer Neigung des Kraftfahrzeugs entlang einer Ebene senkrecht zu dessen Längsachse das bewegliche Element mittels der Aktorik so bewegt wird, dass die Lage eines jeweiligen Umfeldsensors (d.h. jedes Umfeldsensors) bei der Neigung des Kraftfahrzeugs gegenüber der Lage des jeweiligen Umfeldsensors ohne Neigung des Kraftfahrzeugs unverdreht in Bezug zur Längsachse des Kraftfahrzeugs ist. Mit anderen Worten kann die Veränderung der Lage des jeweiligen Umfeldsensors zwischen der aufrechten und der geneigten Position des Kraftfahrzeugs rein durch eine Translation in der Ebene senkrecht zur Längsachse beschrieben werden.

Das erfindungsgemäße Kraftfahrzeug zeichnet sich somit dadurch aus, dass die durch die Neigung des Kraftfahrzeugs verursachte Neigung eines beweglichen Elements bzw. der mit diesem verbundenen Umfeldsensoren durch entsprechende Bewegung des beweglichen Elements mittels der Aktorik ausgeglichen wird. Der Begriff der Neigung bzw. auch die weiter unten genannten Begriffe der Verkippung um die Querachse bzw. Verdrehung um die Hochachse beziehen sich immer auf eine entsprechende Positionsveränderung im Vergleich zur aufrechten Position des Kraftfahrzeugs, welche das Fahrzeug bei einer Geradeausfahrt einnimmt. In der aufrechten Position verläuft die Hochachse des Kraftfahrzeugs parallel zur Schwerkraftrichtung und dessen Längsachse entspricht der Fahrtrichtung des Kraftfahrzeugs.

Im erfindungsgemäßen Kraftfahrzeug ist das bewegliche Element in einem Scheinwerfermodul in der Front des Kraftfahrzeugs verbaut. Dabei ist das bewegliche Element eine bewegliche optische Einrichtung eines Scheinwerfers des Scheinwerfermoduls, wodurch die mit dem Scheinwerfer generierte Lichtverteilung mittels der Aktorik in gleicher Weise wie der oder die Umfeldsensoren bewegt wird. Hierdurch wird neben einer guten Erfassung des Umfelds über die Umfeldsensorik gleichzeitig auch eine gute Ausleuchtung der Fahrbahn mittels des entsprechenden Scheinwerts bei Neigung oder gegebenenfalls auch anderen Schräglagen des Kraftfahrzeugs erreicht.

Das erfindungsgemäße Kraftfahrzeug weist den Vorteil auf, dass ein für die Geradeausfahrt ausgelegter Erfassungsbereich einer Umfeldsensorik auch bei der Neigung des Kraftfahrzeugs bei Kurvenfahrten beibehalten wird und es nicht zu einer Verdrehung des Erfassungsbereichs kommt, so dass die Kurvenaußenseite durch die Umfeldsensorik detektiert werden kann. Ein weiterer Vorteil des erfindungsgemäßen Kraftfahrzeugs besteht darin, dass für herkömmliche Kraftfahrzeuge ohne Neigetechnik entwickelte Umfeldsensoren und deren Auswertesoftware, welche für eine Position ohne Neigung horizontal zur Fahrbahn ausgelegt sind, auch in einspurigen Kraftfahrzeugen bzw. Kraftfahrzeugen mit Neigetechnik weitestgehend übernommen werden können.

In dem erfindungsgemäßen Kraftfahrzeug können neben den oben beschriebenen Umfeldsensoren, die mit einem beweglichen Element starr verbunden sind, gegebenenfalls auch weitere Umfeldsensoren verbaut werden, welche nicht beweglich sind bzw. mit einem anderen beweglichen Element starr verbunden sind. Vorzugsweise sind jedoch alle Umfeldsensoren im Kraftfahrzeug mit einem entsprechenden beweglichen Element starr verbunden, um bei einer Neigung des Kraftfahrzeugs derart bewegt zu werden, dass sie ihre Ausrichtung im Vergleich zur Ausrichtung in aufrechter Position des Kraftfahrzeugs nicht verändern.

Als Lagesensorik kann in dem erfindungsgemäßen Kraftfahrzeug ein an sich bekannter Sensor bzw. eine Kombination aus bekannten Sensoren eingesetzt werden. Die Sensoren können beispielsweise kapazitiv oder mittels eines Gyroskops arbeiten.

In einer besonders bevorzugten Ausführungsform des erfindungsgemäßen Kraftfahrzeugs ist die Steuereinrichtung derart ausgestaltet, dass sei die Aktorik im Betrieb des Kraftfahrzeugs in Abhängigkeit von der durch die Lagesensorik detektierten Lage des Kraftfahrzeugs ferner derart ansteuert, dass bei einer Verkippung des Kraftfahrzeugs um dessen Querachse das bewegliche Element so bewegt wird, dass ein jeweiliger Umfeldsensor um den Betrag des Winkels der Verkippung in entgegengesetzter Richtung zur Verkippung verkippt wird. Auf diese Weise kann neben der Neigung auch eine Nickbewegung des Kraftfahrzeugs beim Beschleunigen bzw. Bremsen ausgeglichen werden.

In einer weiteren zweckmäßigen Ausgestaltung des erfindungsgemäßen Kraftfahrzeugs ist die Steuereinheit derart ausgestaltet, dass sie die Aktorik im Betrieb des Kraftfahrzeugs in Abhängigkeit von der durch die Lagesensorik detektierten Lage des Kraftfahrzeugs ferner derart ansteuert, dass bei einer Verdrehung des Kraftfahrzeugs um dessen Hochachse das bewegliche Element so bewegt wird, dass ein jeweiliger Umfeldsensor um den Betrag des Winkels der Verdrehung in entgegengesetzter Richtung der Verdrehung verdreht wird.

In einer weiteren bevorzugten Ausführungsform sind der oder die Umfeldsensoren in dem Gehäuse des Scheinwerfers angeordnet, der die bewegliche optische Einrichtung umfasst. Hierdurch wird eine kompakte Unterbringung der Umfeldsensoren gewährleistet. Je nach Ausgestaltung kann die bewegliche optische Einrichtung verschiedene Elemente des Scheinwerfers umfassen, insbesondere eine oder mehrere Lichtquellen, wie z.B. LEDs, und/oder eine Projektionsoptik und/oder eine Reflexionsoptik.

Die im Kraftfahrzeug verbauten Umfeldsensoren können auf beliebigen, aus dem Stand der Technik bekannten Technologien beruhen. Insbesondere können der oder die Umfeldsensoren eine oder mehrere Kameras und/oder eine oder mehrere Ultraschallsensoren und/oder eine oder mehrere Radar-Einheiten und/oder eine oder mehrere Lidar-Einheiten umfassen.

In einer weiteren Variante ist das erfindungsgemäße Kraftfahrzeug derart ausgestaltet, dass es den vor ihm liegenden Straßenverlauf ermittelt, wobei die Steuereinheit die Aktorik bei der Fahrt des Kraftfahrzeugs ferner in Abhängigkeit von diesem Straßenverlauf derart ansteuert, dass das bewegliche Element mittels der Aktorik so bewegt wird, dass sich die durch die jeweiligen Umfeldsensoren erfassten Bereiche bei Auftreten einer Kurve im Straßenverlauf in die Kurve hineinbewegen. Diese Bewegung in die Kurve wird vorzugsweise bereits vor der Neigung des Kraftfahrzeugs in der Kurve durchgeführt. Mit dieser Variante wird in dem Kraftfahrzeug die Funktionalität eines Kurvenlichts erreicht, welches in die Kurve hineinleuchtet.

In einer bevorzugten Variante der soeben beschriebenen Ausführungsform ist das Kraftfahrzeug derart ausgestaltet, dass es den vor ihm liegenden Straßenverlauf über die Bestimmung seiner Position mittels satellitengestützter Ortung und Abgleich dieser Position mit einer digitalen Straßenkarte ermittelt. Die Straßenkarte kann dabei im Kraftfahrzeug hinterlegt sein, oder das Kraftfahrzeug kann diese mittels einer geeigneten Kommunikationseinrichtung von einem Server abrufen. Alternativ oder zusätzlich kann das Kraftfahrzeug den Straßenverlauf auch dadurch ermitteln, dass es digitale Daten, die den Straßenverlauf beschreiben, über eine Car-to-X-Kommunikation empfängt. Mittels dieser Kommunikation werden Fahrzeugen Informationen von anderen Fahrzeugen bzw. von einer Verkehrsinfrastruktur (wie z.B. Ampeln) übermittelt.

Ausführungsbeispiele der Erfindung werden nachfolgend anhand der beigefügten Figuren detailliert beschrieben.

Es zeigen:
Fig. 1 eine schematische Darstellung einer Ausführungsform eines erfindungsgemäßen Motorrads;
Fig. 2 eine Draufsicht auf das Scheinwerfermodul des Motorrads aus Fig. 1 in aufrechter Position bei Geradeausfahrt; und
Fig. 3 eine Draufsicht auf das Scheinwerfermodul aus Fig. 2 in geneigter Position bei einer Kurvenfahrt nach links.

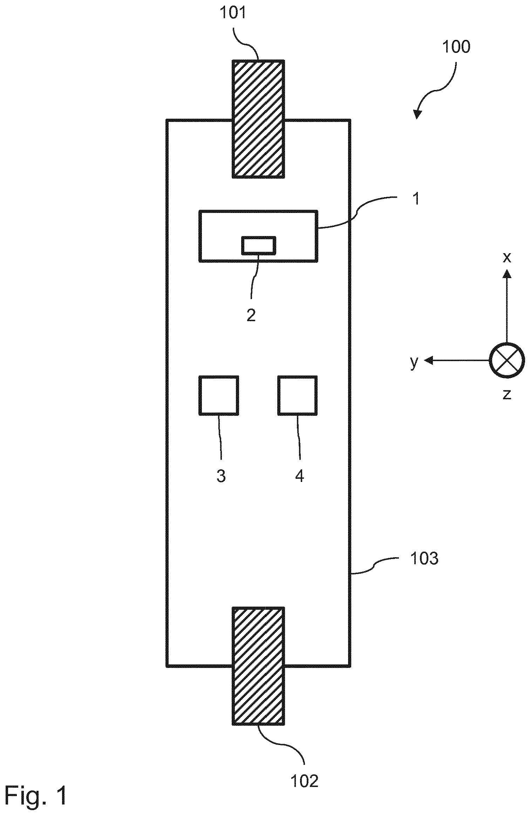

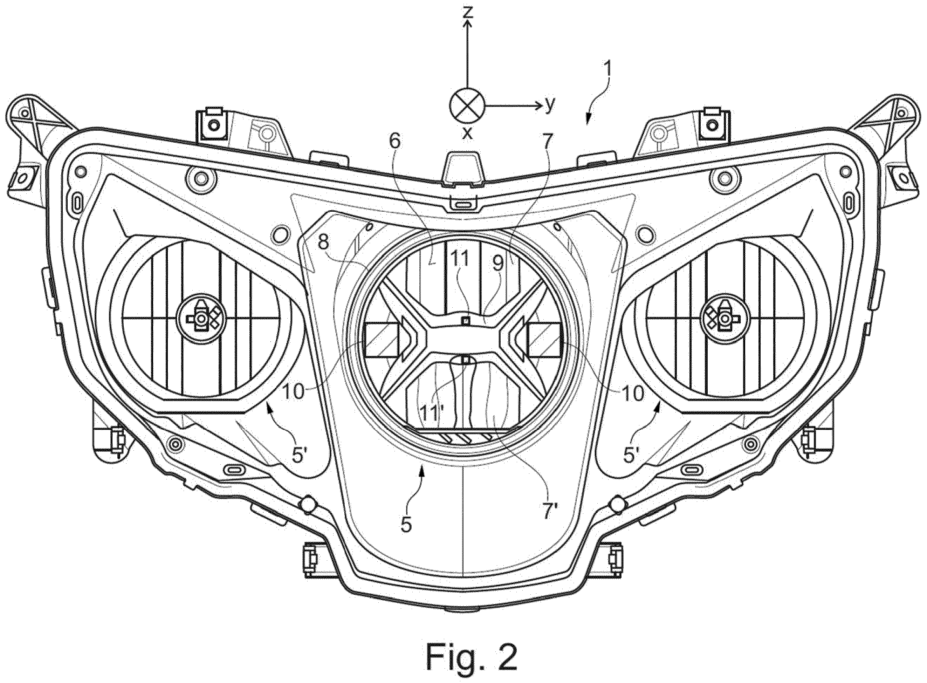

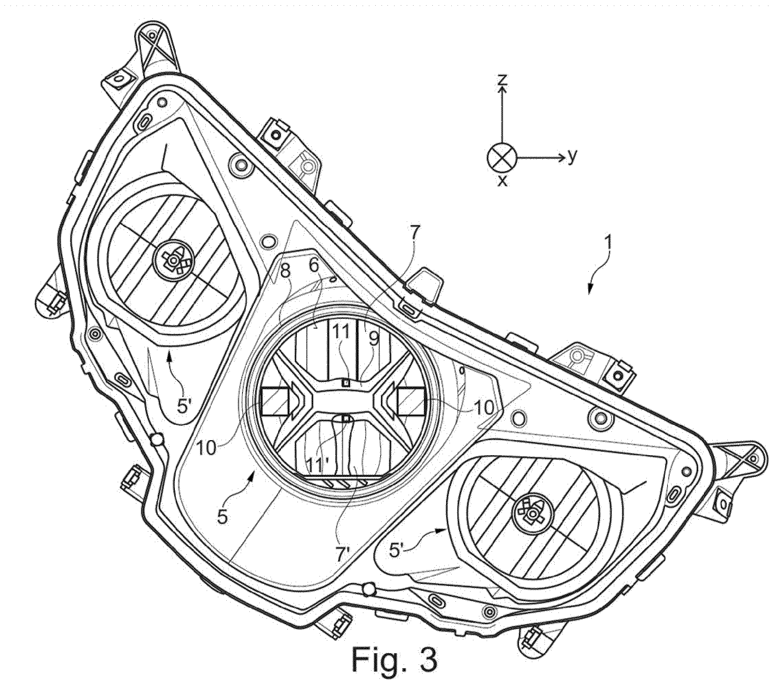

Nachfolgend wird eine Ausführungsform eines erfindungsgemäßen Kraftfahrzeugs anhand eines einspurigen Kraftfahrzeugs in der Form eines Motorrads beschrieben. Fig. 1 zeigt stark schematisiert die Draufsicht von oben auf das Motorrad, welches mit Bezugszeichen 100 bezeichnet ist und in aufrechter Position geradeaus fährt. Das Motorrad umfasst ein Vorderrad 101 sowie ein Hinterrad 102. Die Längsachse entspricht der Achse x des dargestellten Koordinatensystems. Demgegenüber verläuft die Querrichtung des Motorrads in Richtung der Achse y des Koordinatensystems und die Hochsachse des Motorrads in Richtung der Achse z. Der Rahmen des Motorrads ist schematisch als Rechteck angedeutet und mit dem Bezugszeichen 103 bezeichnet. An der Front des Motorrads befindet sich ein Scheinwerfermodul 1, dessen Aufbau näher anhand von Fig. 2 und Fig. 3 erläutert wird. Der mittlere Scheinwerfer des Moduls verfügt über die in Fig. 1 schematisch angedeutete Aktorik 2, mit der der Scheinwerfer bei einer Kurvenfahrt derart verschwenkt werden kann, dass er horizontale Lage auch bei der Neigung des Motorrads in der Kurve beibehält.

Am Rahmen des Motorrads 100 ist eine Lagesensorik 3 vorgesehen, mit der die Ausrichtung der Längsachse, Querachse und Hochachse des Motorrads erfasst werden kann. Die Lagesensorik 3 basiert auf an sich bekannten Technologien und kann die Lage des Motorrads z.B. kapazitiv und/oder über ein Gyroskop erfassen. Ferner ist in dem Motorrad 100 eine Steuereinheit 4 vorgesehen, mit der verschiedene Funktionalitäten des Motorrads gesteuert werden. In der hier beschriebenen Ausführungsform übernimmt diese Steuereinheit auch die Steuerung der Aktorik 2.

Das Motorrad umfasst ferner eine Umfeldsensorik, die in den Figuren 2 und 3 gezeigt ist und im Scheinwerfermodul 1 verbaut ist. Die Auswertung der Daten der Umfeldsensorik erfolgt in der hier beschriebenen Ausführungsform ebenfalls über die Steuereinheit 4. Die Umfeldsensorik wird in Kombination mit einem Fahrerassistenzsystem genutzt, um den Abstand des Motorrads zu vorausfahrenden Objekten bzw. Fahrzeugen zu erkennen und diesen Abstand automatisch zu regulieren bzw. die Geschwindigkeit des Motorrads automatisch entsprechend anzupassen.

Das Motorrad 100 der Fig. 1 verändert während seiner Fahrt seine Ausrichtung im Raum. Bei einer Kurvenfahrt neigt sich das Motorrad um die Längsachse, d.h. das Motorrad neigt sich entlang einer Ebene senkrecht zu der Längsachse. Diese Bewegung wird häufig auch als Rollen bezeichnet. Darüber hinaus verändert sich bei der Fahrt des Motorrads auch die Ausrichtung seiner Längsachse in der Art, dass sich diese um die Querachse dreht. Diese Bewegung wird auch als sog. Nicken bezeichnet und trifft u.a. beim Bremsen und Beschleunigung auf. Darüber hinaus verdreht sich die Längsachse bei einer Kurvenfahrt auch um die Hochachse. Diese Bewegung tritt beim Übersteuern bzw. Untersteuern auf und wird auch als Gieren bezeichnet.

In der hier beschriebenen Ausführungsform wird mittels der Aktorik 2 die Neigung der durch das Scheinwerfermodul 1 generierten Lichtverteilung bei einer Kurvenfahrt durch eine entsprechende Gegenbewegung eines der Scheinwerfer über die Aktorik 2 ausgeglichen. Erfindungswesentlich ist dabei, dass gleichzeitig auch die Neigung des Erfassungsbereichs der Umfeldsensorik ausgeglichen wird, wie weiter unten anhand von Fig. 2 und Fig. 3 erläutert wird. Darüber hinaus wird mit der Aktorik 2 auch eine Nickbewegung der Lichtverteilung und entsprechend auch die Nickbewegung der Umfeldsensorik kompensiert.

Fig. 2 zeigt eine Draufsicht auf das Scheinwerfermodul 1 der Fig. 1. Das Modul umfasst einen mittleren Scheinwerfer 5 sowie einen rechten und einen linken Scheinwerfer 5'. Der mittlere Scheinwerfer 5 dient zur Erzeugung sowohl der Abblendlichtverteilung als auch der Fernlichtverteilung des Motorrads. Beim Anschalten des Fernlichts können ergänzend noch die beiden Scheinwerfer 5' hinzugeschaltet werden. Der mittlere Scheinwerfer 5 umfasst ein Gehäuse 8, in dem sich eine optische Einrichtung 6 befindet. Diese optische Einrichtung umfasst einen oberen Freiformreflektor 7 und einen unteren Freiformreflektor 7'. Hinter einer X-förmigen Blende 9 befindet sich eine obere LED-Einheit 11, die auf den Freiraumreflektor 7 strahlt, sowie eine untere LED-Einheit 11', die auf den Freiraumreflektor 7' strahlt. Die LED-Einheiten 11 und 11' sind lediglich schematisch durch schwarze Quadrate angedeutet. Durch das Anschalten der LED-Einheit 11 wird das Abblendlicht des Scheinwerfermoduls aktiviert, wohingegen durch das Anschalten der LED-Einheit 11' das Fernlicht aktiviert wird. Die optische Einrichtung 6 kann mittels der Aktorik 2, die nicht aus Fig. 2 ersichtlich ist, sowohl um die Längsachse x als auch um die Querachse y verschwenkt werden. Die Aktorik 2 wird dabei über die Steuereinheit 4 derart angesteuert, dass bei der Detektion einer Neigung des Motorrads bzw. einer Nickbewegung des Motorrads diese Neigung bzw. Nickbewegung durch gegenläufige Bewegung der optischen Einrichtung 6 ausgeglichen wird, wie weiter unten anhand der Fig. 3 näher beschrieben wird.

Der bis hierhin beschriebene Aufbau des Scheinwerfermoduls 1 ist an sich bekannt. Erfindungswesentlich ist nunmehr, dass in dem Scheinwerfer 5 des Scheinwerfermoduls 1 zusätzlich die bereits oben erwähnte Umfeldsensorik verbaut ist. In dem Beispiel der Fig. 2 sind dabei zwei Umfeldsensoren 10 vorgesehen, welche lediglich schematisch als schraffierte Quadrate angedeutet sind. Als Bauraum für diese Umfeldsensoren wird der Raum links und rechts neben der X-förmigen Blende 9 verwendet, der bis dato nicht für technische Einrichtungen genutzt wurde. Die Umfeldsensoren sind dabei starr mit der optischen Einrichtung 6 verbunden, d.h. sie führen die gleiche Bewegung wie die optische Einrichtung 6 aus. Bei den Umfeldsensoren 10 kann es sich je nach Ausgestaltung um Kameras, Ultraschallsensoren, Radarsensoren, Lidarsensoren und dergleichen handeln. Im Falle eines Radar- bzw. Lidarsensors kann sich z.B. im Bauraum links von der Blende 9 der Radar-/Lidarsender und im Bauraum rechts davon der Radar-/Lidarempfänger befinden (oder umgekehrt). Durch den Verbau der Umfeldsensorik in einem beweglichen Element des Scheinwerfers wird erreicht, dass bei einer Schräglage des Motorrads der durch die Sensorik erfasste Bereich seine horizontale Lage gegenüber der Position in aufrechter Stellung des Motorrads nicht verändert. Hierdurch wird sichergestellt, dass sich der mit der Umfeldsensorik erfasste Bereich bei einer Kurvenfahrt nicht schräg stellt und somit der Sichtbereich auf der Kurvenaußenseite nicht eingeschränkt wird, was beim Verbau der Umfeldsensorik in einem unbeweglichen Bauteil in der Front des Motorrads der Fall ist.

Fig. 3 zeigt das Scheinwerfermodul 1 der Fig. 2 bei dessen Neigung, wenn das Motorrad in eine Linkskurve fährt. Wie man erkennt, neigen sich dabei alle Bauteile des Scheinwerfermoduls mit Ausnahme der optischen Einrichtung 6. Dies wird dadurch erreicht, dass die Schräglage des Motorrads mittels der Lagesensorik 3 detektiert wird und die Steuereinheit 4 dann die Aktorik 2 derart ansteuert, dass die optische Einrichtung entgegen der Neigungsrichtung, d.h. im Falle der Fig. 3 gegen den Uhrzeigersinn, soweit verdreht wird, wie das Motorrad schräg steht. Die Verdrehung entspricht somit dem Winkel der Schräglage. Dies hat bei eingeschaltetem Scheinwerfer den Effekt, dass auch bei einer Kurvenfahrt der Bereich vor der Fahrbahn bestmöglich ausgeleuchtet wird. Zusätzlich wird die optimale Erfassung des Bereichs vor dem Motorrad über die Umfeldsensorik gewährleistet, da diese durch die starre Verbindung mit der optischen Einrichtung 6 der Bewegung dieser Einrichtung folgt.

Wie bereits oben erwähnt, wird in dem Scheinwerfermodul gemäß Fig. 2 und Fig. 3 auch eine Nickbewegung ausgeglichen. Dies geschieht dadurch, dass bei einer Verdrehung der Längsachse in Richtung nach oben oder unten um die Querachse die optische Einrichtung 6 in die entsprechende Gegenrichtung über die Aktorik 2 gekippt wird. Dies wird wiederum über die Steuereinheit 4 erreicht, wobei die Steuereinheit hierbei auf die Lagesensorik 3 zugreift, welche die Nickbewegung erfasst. Durch die starre Verbindung der Umfeldsensorik 10 mit der optischen Einrichtung 6 wird die Nickbewegung dabei nicht nur für den Scheinwerfer 5, sondern auch für die Umfeldsensorik 10 ausgeglichen. In modifizierten Ausführungsformen besteht darüber hinaus die Möglichkeit, dass auch das oben beschriebene Gieren durch die Bewegung der optischen Einrichtung des Scheinwerfers ausgeglichen wird. Die oben beschriebenen Bewegungen der optischen Einrichtung 6 werden sowohl bei angeschaltetem als auch bei abgeschaltetem Scheinwerfer 5 durchgeführt, so dass eine optimale Umfelderfassung durch die Umfeldsensorik auch tagsüber bei abgeschaltetem Scheinwerfer gewährleistet ist.

Die im Vorangegangenen beschriebenen Ausführungsformen der Erfindung weisen eine Reihe von Vorteilen auf. Insbesondere wird durch die Anbindung einer Umfeldsensorik an ein bewegliches Element eines Scheinwerfers sichergestellt, dass der erfasste Bereich der Umfeldsensorik immer horizontal zur Fahrbahn liegt. Somit bleibt ein optimales Sichtfenster der Sensorik in voller Größe erhalten. Da die Umfeldsensorik in der Regel für Kraftfahrzeuge ohne Neigetechnik entwickelt wurde, kann diese Sensorik ohne Adaption weitestgehend auch für Kraftfahrzeuge mit Neigetechnik übernommen werden. Darüber hinaus wird neben einem optimalen Sichtfenster der Umfeldsensorik auch eine optimale Ausleuchtung des Bereichs vor dem Motorrad über dessen Scheinwerfer gewährleistet.

### Bezugszeichenliste

- 100: Motorrad
- 101: Vorderrad des Motorrads
- 102: Hinterrad des Motorrads
- 103: Rahmen des Motorrads
- 1: Scheinwerfermodul
- 2: Aktorik
- 3: Lagesensorik
- 4: Steuereinheit
- 5, 5': Scheinwerfer
- 6: optische Einrichtung
- 7, 7': Freiformreflektoren
- 8: Gehäuse
- 9: Blende
- 10: Umfeldsensoren
- 11, 11': Lichtquellen/LED-Einheiten
- x: Längsachse des Motorrads
- y: Querachse des Motorrads
- z: Hochachse des Motorrads

## Patentansprüche

1. Einspuriges oder mehrspuriges Kraftfahrzeug (100) mit Neigetechnik, umfassend einen oder mehrere Umfeldsensoren (10), die in der Front des Kraftfahrzeugs (100) verbaut sind und zur Erfassung eines Bereichs vor der Front des Kraftfahrzeugs (100) eingerichtet sind,
wobei der oder die Umfeldsensoren (10) starr mit einem beweglichen Element (6) verbunden sind, das über eine Aktorik (2) durch Drehen und/oder Verschwenken bewegt werden kann, wobei im Kraftfahrzeug (100) eine Steuereinheit (4) zur Steuerung der Aktorik (2) sowie eine Lagesensorik (3) zur Detektion der Lage des Kraftfahrzeugs (100) im Raum vorgesehen ist, wobei die Steuereinheit (4) die Aktorik (2) bei der Fahrt des Kraftfahrzeugs (100) in Abhängigkeit von der durch die Lagesensorik (3) detektierten Lage des Kraftfahrzeugs (100) im Raum derart ansteuert, dass bei einer Neigung des Kraftfahrzeugs (100) entlang einer Ebene senkrecht zu dessen Längsachse (x) das bewegliche Element (6) mittels der Aktorik (2) so bewegt wird, dass die Lage eines jeweiligen Umfeldsensors (10) bei der Neigung des Kraftfahrzeugs (100) gegenüber der Lage des jeweiligen Umfeldsensors (10) ohne Neigung des Kraftfahrzeugs (100) unverdreht in Bezug zur Längsachse (x) des Kraftfahrzeugs (100) ist,
wobei
- das bewegliche Element (6) in einem Scheinwerfermodul (1) in der Front des Kraftfahrzeugs (100) verbaut ist und das bewegliche Element (6) eine bewegliche optische Einrichtung eines Scheinwerfers (5) des Scheinwerfermoduls (1) ist, wodurch die mit dem Scheinwerfer (5) generierte Lichtverteilung mittels der Aktorik (2) in gleicher Weise wie der oder die Umfeldsensoren (10) bewegt wird, und
- die Steuereinheit (4) die Aktorik (2) im Betrieb des Kraftfahrzeugs (100) in Abhängigkeit von der durch die Lagesensorik (3) detektierten Lage des Kraftfahrzeugs (100) ferner derart ansteuert, dass bei einer Verdrehung des Kraftfahrzeugs um dessen Hochachse (z) das bewegliche Element (6) so bewegt wird, dass ein jeweiliger Umfeldsensor (10) um den Betrag des Winkels der Verdrehung in entgegengesetzter Richtung der Verdrehung verdreht wird.

2. Kraftfahrzeug nach Anspruch 1, **dadurch gekennzeichnet, dass** die Steuereinheit (4) die Aktorik (2) im Betrieb des Kraftfahrzeugs in Abhängigkeit von der durch die Lagesensorik (3) detektierten Lage des Kraftfahrzeugs (100) ferner derart ansteuert, dass bei einer Verkippung des Kraftfahrzeugs (100) um dessen Querachse (y) das bewegliche Element (6) so bewegt wird, dass ein jeweiligen Umfeldsensor (10) um den Betrag des Winkels der Verkippung in entgegengesetzter Richtung zur Verkippung verkippt wird.

3. Kraftfahrzeug nach einem der vorhergehenden Ansprüche, **dadurch gekennzeichnet, dass** der oder die Umfeldsensoren (10) in dem Gehäuse (8) des Scheinwerfers (5) angeordnet sind, der die bewegliche optische Einrichtung umfasst.

4. Kraftfahrzeug nach einem der vorhergehenden Ansprüche, **dadurch gekennzeichnet, dass** die bewegliche optische Einrichtung (6) eine oder mehrere Lichtquellen (11) und/oder eine Projektionsoptik und/oder eine Reflexionsoptik (7, 7') umfasst.

5. Kraftfahrzeug nach einem der vorhergehenden Ansprüche, **dadurch gekennzeichnet, dass** der oder die Umfeldsensoren (10) eine oder mehrere Kameras und/oder einen oder mehrere Ultraschallsensoren und/oder eine oder mehrere Radar-Einheiten und/oder eine oder mehrere Lidar-Einheiten umfassen.

6. Kraftfahrzeug nach einem der vorhergehenden Ansprüche, **dadurch gekennzeichnet, dass** das Kraftfahrzeug (100) derart ausgestaltet ist, dass es den vor ihm liegenden Straßenverlauf ermittelt, wobei die Steuereinheit (4) die Aktorik (2) bei der Fahrt des Kraftfahrzeugs (100) ferner in Abhängigkeit von diesem Straßenverlauf derart ansteuert, dass das bewegliche Element (6) mittels der Aktorik (2) so bewegt wird, dass sich die durch die jeweiligen Umfeldsensoren (10) erfassten Bereiche bei Auftreten einer Kurve in Straßenverlauf in die Kurve hinein bewegen.

7. Kraftfahrzeug nach Anspruch 6, **dadurch gekennzeichnet, dass** das Kraftfahrzeug (100) derart ausgestaltet ist, dass es den vor ihm liegenden Straßenverlauf über die Bestimmung seiner Position mittels satellitengestützter Ortung und Abgleich dieser Position mit einer digitalen Straßenkarte ermittelt und/oder dass es den Straßenverlauf dadurch ermittelt, dass es digitale Daten, die den Straßenverlauf beschreiben, über eine Car-to-X-Kommunikation empfängt.

## Claims

1. Single-track or multi-track motor vehicle (100) with tilt technology, comprising one or more environment sensors (10) that are installed in the front of the motor vehicle (100) and that are configured to cover an area in front of the front of the motor vehicle (100),
wherein the environment sensor(s) (10) are rigidly connected to a movable element (6) that can be moved by means of an actuator (2) by turning and/or pivoting, wherein a control unit (4) for controlling the actuator (2) and a position sensor system (3) for detecting the position of the motor vehicle (100) in space are provided in the motor vehicle (100), wherein the control unit (4) controls the actuator (2) while the motor vehicle (100) is travelling depending on the position of the motor vehicle (100) in space that is detected by the position sensor system (3) in such a way that, when the motor vehicle (100) is tilted along a plane perpendicular to the longitudinal axis thereof (x), the movable element (6) is moved by means of the actuator (2) so that the position of a respective environment sensor (10) is not rotated relative to the longitudinal axis (x) of the motor vehicle (100) when the motor vehicle (100) is tilted compared to the position of the respective environment sensor (10) when the motor vehicle (100) is not tilted,
wherein
- the movable element (6) is installed in a headlamp module (1) in the front of the motor vehicle (100) and the movable element (6) is a movable optical device of a headlamp (5) of the headlamp module (1), whereby the light distribution that is produced with the headlamp (5) is moved by means of the actuator (2) in the same way as the environment sensor(s) (10), and
- the control unit (4) further controls the actuator (2) while the motor vehicle (100) is operating depending on the position of the motor vehicle (100) that is detected by the position sensor system (3) in such a way that, in the event of rotation of the motor vehicle about the vertical axis (z) thereof, the movable element (6) is moved so that a respective environment sensor (10) is rotated by the magnitude of the angle of rotation in the opposite direction to the rotation.

2. Motor vehicle according to Claim 1, **characterized in that** the control unit (4) further controls the actuator (2) while the motor vehicle is operating depending on the position of the motor vehicle (100) that is detected by the position sensor system (3) in such a way that, in the event of inclination of the motor vehicle (100) about the lateral axis (y) thereof, the movable element (6) is moved so that a respective environment sensor (10) is inclined by the magnitude of the angle of inclination in the opposite direction to the inclination.

3. Motor vehicle according to either of the preceding claims, **characterized in that** the environment sensor(s) (10) are disposed in the housing (8) of the headlamp (5) that comprises the movable optical device.

4. Motor vehicle according to any one of the preceding claims, **characterized in that** the movable optical device (6) comprises one or more light sources (11) and/or projection optics and/or reflection optics (7, 7').

5. Motor vehicle according to any one of the preceding claims, **characterized in that** the environment sensor(s) (10) include one or more cameras and/or one or more ultrasonic sensors and/or one or more radar units and/or one or more lidar units.

6. Motor vehicle according to any one of the preceding claims, **characterized in that** the motor vehicle (100) is designed so as to determine the course of the road ahead, wherein the control unit (4) further controls the actuator (2) while the motor vehicle (100) is travelling depending on said course of the road in such a way that the movable element (6) is moved by means of the actuator (2) so that the regions detected by the respective environment sensors (10) move into the bend when a bend occurs in the course of the road.

7. Motor vehicle according to Claim 6, **characterized in that** the motor vehicle (100) is designed so as to determine the course of the road ahead by determining its position by means of satelliteassisted location and by matching said position with a digital road map and/or so as to determine the course of the road by receiving digital data describing the course of the road by means of car-to-X communication.

## Revendications

1. Véhicule automobile monovoie ou multivoies (100) à technologie pendulaire, ledit véhicule comprenant un ou plusieurs capteurs d'environnement (10) qui sont installés à l'avant du véhicule automobile (100) et qui sont conçus pour détecter une zone située à l'avant du véhicule automobile (100), le ou les capteurs d'environnement (10) étant reliés rigidement à un élément mobile (6) qui peut être déplacé par rotation et/ou pivotement par le biais d'un système d'actionnement (2), une unité de commande (4) destinée à commander le système d'actionnement (2) et un système de détection de position (3) destiné à détecter la position du véhicule automobile (100) dans l'espace étant prévus dans le véhicule automobile (100), l'unité de commande (4) commandant le système d'actionnement (2), lorsque le véhicule automobile (100) est en mouvement, en fonction de la position, détectée par les capteurs de position (3), du véhicule automobile (100) dans l'espace de sorte que, lorsque le véhicule automobile (100) s'incline le long d'un plan perpendiculaire à son axe longitudinal (x), l'élément mobile (6) est déplacé au moyen du système d'actionnement (2) de sorte que, lorsque le véhicule automobile (100) s'incline par rapport à la position du capteur d'environnement respectif (10), la position d'un capteur d'environnement respectif (10) ne subit pas de rotation par rapport à l'axe longitudinal (x) du véhicule automobile (100) en l'absence d'inclinaison du véhicule automobile (100),
- l'élément mobile (6) étant installé dans un module de phare (1) situé à l'avant du véhicule automobile (100) et l'élément mobile (6) étant un dispositif optique mobile d'un phare (5) du module de phare (1), ce qui permet de déplacer la distribution de lumière générée avec le phare (5) au moyen du système d'actionnement (2) de la même manière que le ou les capteurs d'environnement (10), et
- l'unité de commande (4) commandant également le système d'actionnement (2) pendant le fonctionnement du véhicule automobile (100) en fonction de la position, détectée par le système de détection de position (3), du véhicule automobile (100) de manière à ce que, lorsque le véhicule automobile tourne sur son axe vertical (z), l'élément mobile (6) soit déplacé de sorte qu'un capteur d'environnement respectif (10) soit tourné dans le sens de rotation opposé de la valeur absolue de l'angle de rotation.

2. Véhicule automobile selon la revendication 1, **caractérisé en ce que** l'unité de commande (4) commande également le système d'actionnement (2) pendant le fonctionnement du véhicule automobile en fonction de la position, détectée par le capteur de position (3), du véhicule automobile (100) de manière à ce que, lors d'un basculement du véhicule automobile (100) sur son axe transversal (y), l'élément mobile (6) soit déplacé de sorte qu'un capteur d'environnement respectif (10) soit incliné de la valeur absolue de l'angle d'inclinaison dans le sens de basculement opposé.

3. Véhicule automobile selon l'une des revendications précédentes, **caractérisé en ce que** le ou les capteurs d'environnement (10) sont disposés dans le boîtier (8) du phare (5) qui comprend le dispositif optique mobile.

4. Véhicule automobile selon l'une des revendications précédentes, **caractérisé en ce que** le dispositif optique mobile (6) comporte une ou plusieurs sources de lumière (11) et/ou une optique de projection et/ou une optique de réflexion (7, 7').

5. Véhicule automobile selon l'une des revendications précédentes, **caractérisé en ce que** le ou les capteurs d'environnement (10) comprennent une ou plusieurs caméras et/ou un ou plusieurs capteurs à ultrasons et/ou une ou plusieurs unités radar et/ou une ou plusieurs unités lidar.

6. Véhicule automobile selon l'une des revendications précédentes, **caractérisé en ce que** le véhicule automobile (100) est conçu de manière à déterminer l'allure de la route devant lui, l'unité de commande (4) commandant également le système d'actionnement (2), lorsque le véhicule automobile (100) est en mouvement, en fonction de l'allure de la route de manière à ce que l'élément mobile (6) soit déplacé par le système d'actionnement (2) de sorte que, lorsqu'une courbe apparaît dans l'allure de la route, les zones détectées par les capteurs d'environnement respectifs (10) se déplacent jusque dans la courbe.

7. Véhicule automobile selon la revendication 6, **caractérisé en ce que** le véhicule automobile (100) est conçu de manière à déterminer l'allure de la route devant lui en déterminant sa position à l'aide d'un positionnement par satellite et en comparant cette position à une carte routière numérique et/ou à déterminer l'allure de la route en recevant des données numériques qui décrivent l'allure de la route par le biais d'une communication Car-to-X.
